# EUROPEAN PATENT APPLICATION

(11) **EP 2 085 366 A2**
(43) Date of publication of application: **05.08.2009**
(21) Application number: 08173125.9
(22) Date of filing: 30.12.2008
(51) Int. Cl.: C04B 28/02, C04B 18/08

(54) **Method for producing hydraulic binding agent in a form of activated fly ash, activated fly ash, hydraulic binding agent, sulfur or cement concrete, mineral-asphalt mixture and application of the activated fly ash**

(30) Priority: 31.12.2007 PL 38419907
(71) Applicant: Wapeco Sp. z o.o, 04-088 Warszawa (PL); Vegalo Limited, 1060 Nicosia (CY); Kmiotek, Bartlomiej, 42-525 Bledow (PL); Sosinski, Ryszard, 42-200 Czestochowa- (PL); Nowak, Wojciech, 42-200 Czestochowa (PL)
(72) Inventor: Kmiotek, Bartlomiej, 42-525 Bledów (PL); Cwiakala, Michal, 57-402 Nowa Ruda (PL)
(74) Representative: Kaminski, Piotr

(57) **Abstract**

The invention is related to a method of preparation of a hydraulic binding agent in a form of activated fly ash, characterised in that the starting fly ash is activated by grinding in an electromagnetic mill. The invention is also related to the activated ash, the hydraulic binding agent, sulfur or cement concrete and other mineral mixtures.

## Description

Object of the invention is a method for producing hydraulic binding agent in a form of activated fly ash, activated fly ash, hydraulic binding agent, sulfur or cement concrete, mineral-asphalt mixture and application of the activated fly ash.

Hydraulic binding agents are used in highway engineering - for production of binding agents used in highway engineering that enable soil stabilization; to make road foundations, in particular expressways, protective embankments of various type, improvement of pavement, for construction of embankments for transport purposes (mixture made of ash and slag), as well as for other buildings and facilities, including foundations; in cement industry - as a substitute of cement and component of concrete; in ceramic industry - for production of full bricks, chequer bricks, cavity bricks and hollow bricks; in agriculture and forestry - for soil deacidification; in plastics and paint industry; at construction and recultivation of waste disposal grounds.

One of the components of a hydraulic binding agent is fly ash obtained from coal combustion in power boilers, referred to as active fly ashes, and ashes of lower content of free CaO, e.g. 3.5% to 7% referred to as ashes of low activity.

From Polish patent No. 100688 a hydraulic binding agent produced from fly ashes is known, which additionally includes binding additives, particularly cement, lime and plaster stone as well as salts of alkaline earth metals and/or salts of group III metals and salts of metals of group I of periodic table of elements.

From Polish patent No. 174628 a method of preparation of a binding agent from brown coal ashes is known, in which at one of its steps ash is ground until specific surface area of 3000-3500 sq.cm/g (acc. to Blaine) is obtained, and then the ash is subject to wetting and hydration.

One of innovative methods of modification of fly ashes discussed above is their activation by means of grinding in an electromagnetic mill. It can be e.g. a mill described in the application No. P382610. Such grinding results in a considerable enhancement of binding properties of fly ashes. The mill makes it possible to perform substantial additional grinding of ashes to obtain grains of size lower than 200 µm.

It was unexpectedly found, that an electromagnetic mill makes it possible to obtain ash exhibiting special properties, illustrated by results presented in Table below.

Object of the invention is a method for producing hydraulic binding agent in a form of activated fly ash, characterised in that starting fly ash is activated by grinding in an electromagnetic mill.

Preferably, activation time in a magnetic mill amounts to 5-300 seconds. Object of the invention is also activated fly ash, characterised in that it is produced by the method defined above and includes 66% fractions of particles of size < 50 µm.

Preferably, the activated fly ash includes 66% fractions of particles of size < 50µm, 75% particles of size < 63µm and 95% particles of size < 200µm.

Object of the invention is also a hydraulic binding agent in a form of fly ash, characterised in that its content includes only activated fly ash defined above, or ash activated in a mixture with the starting ash and which is free from additives of other hydraulic binding agents.

Object of the invention is also a hydraulic binding agent in a form of fly ash, characterised in that as regards its content it includes activated fly ash defined in Claim 3 and moreover it includes up to 15% of other binding additives.

Object of the invention is also a hydraulic binding agent in a form of fly ash, characterised in that as regards its content it includes the activated fly ash defined above or ash activated in a mixture with the starting ash, and moreover - up to 15% of other additives.

Preferably, the binding agent includes cement as an additive.

Object of the invention is also sulfur or cement concrete, characterised in that it includes the activated fly ash defined above.

Object of the invention is also a mineral-asphalt mixture or a binding agent-soil mixture, characterised in that it includes the activated fly ash defined above.

Object of the invention is also application of the activated fly ash defined above as a filler in sulfur concretes, cement concretes and in mineral-asphalt mixtures or binding agent-soil mixtures.

The method of preparation of ash activated according to the invention makes it possible to carry out substantial additional grinding of the fly ash in an electromagnetic mill and to obtain possibly the finest elements as soon as possible i.e. in 5 seconds to 300 seconds, preferably 5 to 60 seconds, and more preferably in 5 to 30 seconds, which will make it possible to obtain a final product exhibiting a considerably greater active surface and better pozzolan properties than the starting fly ash. Additional grinding of ashes results in their considerable activation through acceleration of pozzolan reaction and, as a consequence, an increase in strength of cements, containing ash, ash-soil mixtures, and also other mixtures of binding agents. It is a result of destruction of vitrified external surface of spherical grains of ash (breaking of closed structure), which results in an increase in active surface and a rate of reaction with calcium hydroxide.

An advantage resulting from the process according to the invention is a high output of the electromagnetic mill employed in the process of activation of ashes (10-20 ton per hour), very good results of grinding (ultrafine elements even below 1 µm), high reactivity of the resulting ashes, and low consumption of electric energy without adverse effect on process yield (2-4 kWh/ton).

The activated ashes according to the invention have such advantageous properties, that make it possible e.g. to obtain binding agents without binding additives e.g. of cement.

### Example 1

Preparation of activated ash.

Ash obtained by combustion of brown coal in power boilers of properties given below is introduced to an electromagnetic mill of construction described in the application No. P-382610. A method of introducing starting ash can be analogous to e.g. that described in the application cited. The ash is activated by grinding for 30 seconds. The activated ash was obtained, fractional analysis of which is presented in Table below.

### Fractional analysis

| Grain class, µm | Starting Ash | | Activated ash | |
|---|---|---|---|---|
| | Fraction[%] | Sum of fractions [%] | Fraction [%] | Sum of fractions [%] |
| <20 | 10.32 | 10.32 | 15.71 | 15.71 |
| 20 - 32 | 11.45 | 21.77 | 13.10 | 28.81 |
| 32-40 | 14.45 | 36.22 | 9.29 | 38.10 |
| 40 - 50 | 16.23 | 52.45 | 28.35 | 66.45 |
| 50 - 63 | 7.11 | 59.56 | 8.86 | 75.31 |
| 63-80 | 3.43 | 62.99 | 4.18 | 79.49 |
| 80 - 125 | 11.87 | 74.86 | 8.77 | 88.26 |
| 125 - 200 | 14.17 | 89.03 | 7.63 | 95.89 |
| >200 | 10.97 | 100.00 | 4.09 | 99.98 |
| Loss | | | 0.02 | |
| Total | | 100.00 | | 100.00 |

Activation time - 30 seconds; samples of starting ash and activated ash of mass 400±0.2g were tested.

Results of testing volumetric density upon densification according to Proctor method I:
starting ash - 1,730 g/cm³
activated ash - 1,803 g/cm³

### Example II

### Preparation of mixtures of binding agents

### Sample 1

A binding agent-mineral mixture of the following composition was prepared:
80% activated fly ash
20% river sand

Results of testing strength compression [MPa]:
After 7 days - 6.23 MPa
After 14 days - 4.67 MPa
After 28 days - 10.98 MPa

### Sample 2

A binding agent - mineral mixture of the following composition was prepared:
60% activated fly ash
40% river sand.

Results of testing strength compression [MPa]:
After 7 days - 4.25 MPa
After 14 days - 2.63 MPa
After 28 days - 8.65 MPa

### Sample 3

A mineral-asphalt mixture of the following composition was prepared:
5% asphalt
15% activated ash
80% mineral aggregate of fractions 0/2; 2/8; 8/16.

### Example III

### Binding agent - soil mixtures were prepared, in which starting ash and activated ash according to the invention were used. Results of strength are presented in Table below.

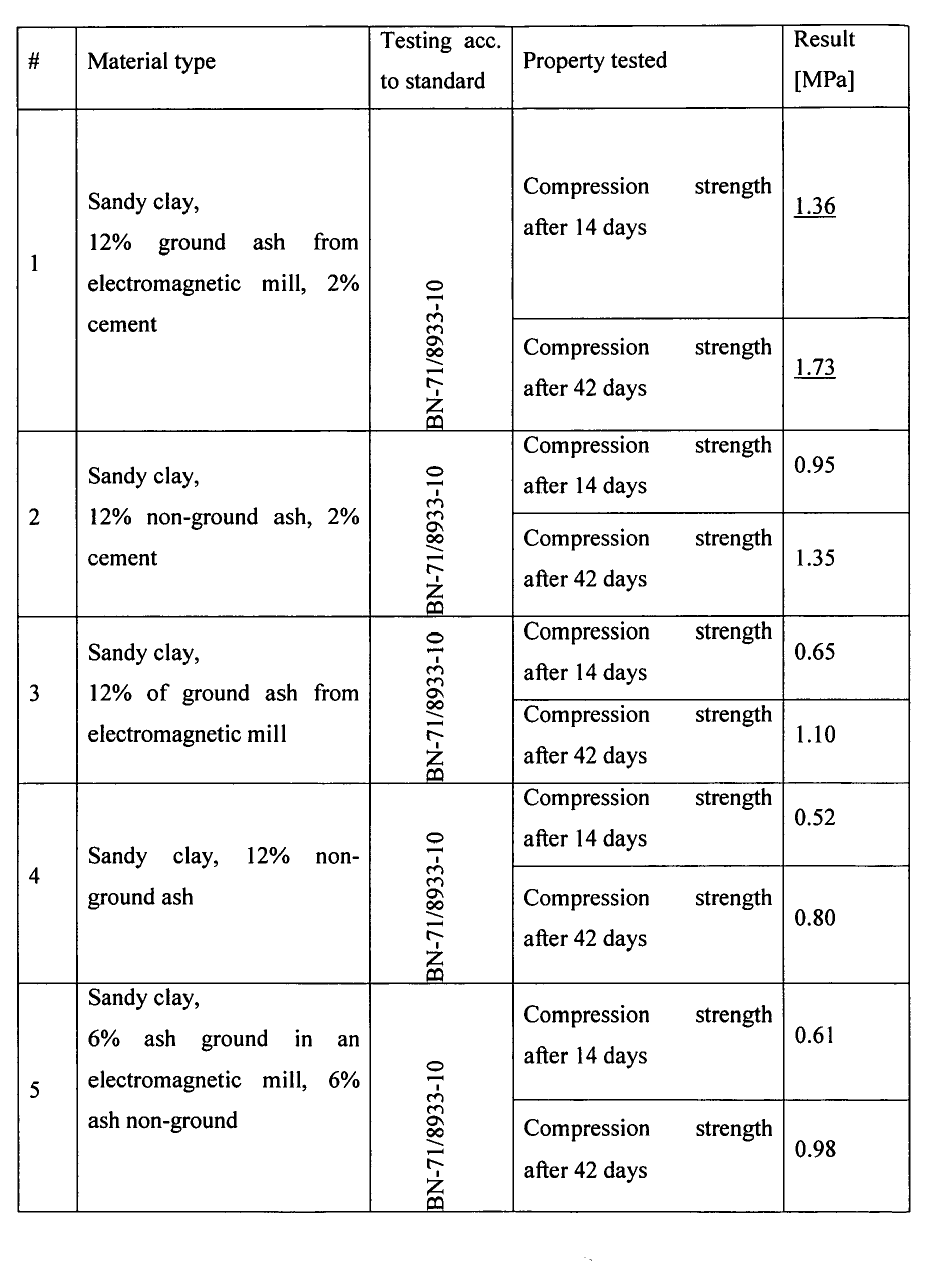

### Example IV

### Sample 1

Mineral aggregates of quartzite grit type at the amount of 70 weight parts and filler constituting the activated fly ash according to the invention, i.e. ground in an electromagnetic mill, at the amount of 9 weight parts were heated to 130-140°C and 21 weight parts of a sulfur binding agent heated to a temperature 110°C were introduced. A preferable example of the sulfur binding agent used is a binding agent developed by Wapeco Sp. z o.o. and Vegalo Limited companies (described in the application of the invention filed on 31.12.2007). The resulting mixture was thoroughly stirred. The concrete was poured into metal moulds. Similarly, the remaining samples 2-4 of sulfur concrete were prepared. Amounts of components were given in weight parts as in case of sample 1.

| Ex. | Amount of quartz grit | Amount of activated ash | Amount of a sulfur binding agent | Weight absorbability [%] | Compression strength [MPa] |
|---|---|---|---|---|---|
| 1 | 70 | 9 | 21 | 1.08 | 46.7 |
| 2 | 69 | 9 | 22 | 0.34 | 51 |
| 3 | 68 | 9 | 23 | 0.31 | 64.6 |
| 4 | 66 | 8 | 26 | 0.09 | 75.2 |

All the percent values given in the present application denote weight percents.

## Claims

1. A method for producing hydraulic binding agent in a form of activated fly ash, **characterised in that** starting fly ash is activated by grinding in an electromagnetic mill.

2. A method, according to Claim 1 **characterised in that** activation time in the magnetic mill amounts from 5 seconds to 300 seconds.

3. Activated fly ash, **characterised in that** it is produced by the method defined in Claim 1 and includes 66% fractions of particles of size < 50 µm.

4. Activated fly ash according to Claim 3, **characterised in that** it includes 66% fractions of particles of size < 50µm and 75% particles of size < 63µm and 95% particles of size < 200µm.

5. Hydraulic binding agent in a form of fly ash, **characterised in that** in its content it includes only activated fly ash defined in Claim 3 or activated ash in a mixture with the starting ash and is free from additives of other hydraulic binding agents.

6. Hydraulic binding agent in a form of fly ash, **characterised in that** as regards its content it includes the activated fly ash defined in Claim 3 and moreover - up to 15% other binding additives.

7. Binding agent according to Claim 6, **characterised in that** it includes cement as an additive.

8. Hydraulic binding agent in a form of fly ash, **characterised in that** as regards its content it includes activated fly ash defined in Claim 3 or activated ash in a mixture with the starting ash, and additionally includes up to 15% other additives.

9. Sulfur or cement concrete, **characterised in that** it includes the activated fly ash defined in Claim 3.

10. Mineral-asphalt mixture or binding agent - soil mixture, **characterised in that** it includes the activated fly ash defined in Claim 3.

11. Application of activated fly ash defined in Claim 3 as a filler in sulfur concretes, cement concretes and mineral-asphalt mixtures or binding agent-soil mixtures.
